# EUROPÄISCHE PATENTANMELDUNG

(11) **EP 1 356 905 A2**
(43) Veröffentlichungstag der Anmeldung: **29.10.2003**
(21) Anmeldenummer: 03100761.0
(22) Anmeldetag: 25.03.2003
(51) Int. Cl.: B26D 5/12

(54) **Abschlagvorrichtung**

(30) Priorität: 26.04.2002 DE 10218721
(71) Anmelder: Voith Paper Patent GmbH, 89522 Heidenheim (DE)
(72) Erfinder: Grupp, Hans, 73447, Oberkochen (DE); Kaufmann, Bernd, 89555, Steinheim (DE)

(57) **Zusammenfassung**

Die Erfindung betrifft Abschlagvorrichtung (10) zum Durchtrennen einer laufenden Materialbahn (24), insbesondere aus Papier oder Karton. Die Abschlagvorrichtung (10) umfasst einen Messerträger (20) mit Abschlagmesser (22)und eine Zylinder-Kolben-Einheit (12) zum Bewegen des Messerträgers (20). Die Zylinder-Kolben-Einheit (12) umfasst einen Zylinder (14), sowie einen in dem Zylinder (14) verlagerbar aufgenommenen Kolben (16), der mit einer Kolbenstange (18) verbunden ist. Erfindungsgemäß ist der Kolben (16) in dem Innenraum (30/32) des Zylinders (14) mit Spiel aufgenommen. Ferner ist eine Rollmembran (26) vorgesehen, die zum einen am Zylinder (14) und zum anderen am Kolben (16) befestigt ist.

## Beschreibung

Die Erfindung betrifft eine Abschlagvorrichtung zum Durchtrennen einer laufenden Materialbahn, insbesondere aus Papier oder Karton, umfassend einen Messerträger mit Abschlagmesser, der der Materialbahn benachbart und auf diese zu bewegbar ist, und eine Stellvorrichtung mit wenigstens einer Zylinder-Kolben-Einheit zum Bewegen des Messerträgers, wobei die Zylinder-Kolben-Einheit einen Zylinder umfasst, sowie einen in dem Zylinder verlagerbar aufgenommenen Kolben, der den Innenraum des Zylinders in zwei Arbeitsräume unterteilt, mit einer Kolbenstange verbunden ist und mit dieser die Stelleinheit der Zylinder-Kolben-Einheit bildet.

Die bei derartigen Abschlagvorrichtungen auftretenden Probleme sollen im Folgenden am Beispiel ihres Einsatzes in der Abrollstation von Offline-Streichmaschinen erläutert werden. In dieser Abrollstation wird die ungestrichene, rohe Materialbahn auf sogenannten Tambouren eingebracht. Diese Tamboure können jeweils nur eine begrenzte Materialbahnlänge aufnehmen. Um einen kontinuierlichen Betrieb der Offline-Streichmaschine ermöglichen zu können, ist es daher erforderlich, die Materialbahn eines nahezu abgelaufenen Tambours mit dem Materialbahnanfang eines folgenden Tambours zu verkleben und die Materialbahn des ablaufenden Tambours im Bereich der so gebildeten Klebe- bzw. Splice-Stelle zu durchtrennen. Dieses Durchtrennen der Materialbahn erfolgt bei voller Maschinengeschwindigkeit mit Hilfe einer gattungsgemäßen Abschlagvorrichtung.

Das Abschlagmesser der Abschlagvorrichtung ist üblicherweise an seiner Schneidkante gezackt ausgebildet. Dies hat den Vorteil, dass die Spitzen der Zacken auf die Materialbahn nur punktuell Druck ausüben und somit leicht in die Materialbahn eindringen, ohne dass diese dem Abschlagmesser übermäßig ausweichen kann. Durch das fortschreitende Eindringen der Zacken in die sich weiterbewegende Materialbahn ergibt sich insgesamt eine entsprechend der Zackung des Abschlagmessers gefranste Schnittlinie. Es hat sich in der Praxis gezeigt, dass die Neigung der Materialbahn, beim Durchlauf durch die Streichmaschine im Bereich der Splice-Stelle zu reißen, umso größer ist, je länger die beim Abschlagen erzeugten Fransen sind. Es ist daher wichtig, dass die Klinge der Abschlagvorrichtung möglichst schnell in die Materialbahn eindringt, um einen möglichst kurzfransigen Schnitt zu erhalten.

Bei der aus der EP 0 739 695 B1 bekannten Abschlagvorrichtung wird die Bewegung des Abschlagmessers von einer pneumatisch betätigbaren Zylinder-Kolben-Einheit bewirkt. Um den ihn vortreibenden Gasdruck effektiv in Vortriebsbewegung umsetzen zu können, ist der Kolben im Wesentlichen spielfrei in den Zylinder eingepasst. Ferner ist am Außenumfang des Kolbens eine Ringdichtung vorgesehen, welche mit der Innenwandung des Zylinders in Eingriff steht. Die enge Passung von Kolben und Zylinder sowie der Reibeingriff von Ringdichtung und Zylinder behindern die Vortriebsbewegung des Kolbens, was sich nachteilig auf die Abschlaggeschwindigkeit des Abschlagmessers auswirkt.

Die gleichen Nachteile weist auch die Zylinder-Kolben-Einheit auf, welche bei der aus der DE 199 14 524 A1 bekannten Abschlagvorrichtung zum Einsatz kommt.

Demgegenüber ist es Aufgabe der Erfindung, eine Abschlagvorrichtung der eingangs genannten Art anzugeben, welche höhere Abschlaggeschwindigkeiten des Abschlagmessers zu erzielen erlaubt.

Diese Aufgabe wird erfindungsgemäß durch eine Abschlagvorrichtung der eingangs genannten Art gelöst, bei welcher der Kolben in dem Innenraum mit Spiel aufgenommen ist und bei welcher eine Rollmembran zum einen am Zylinder und zum anderen am Kolben befestigt ist und die beiden Arbeitsräume gegeneinander abdichtet. Auf diese Weise kann sich der Kolben im Zylinder im Wesentlichen berührungslos und somit annähernd reibungsfrei bewegen. Auch die Rollmembran setzt der Bewegung des Kolbens auf Grund ihrer Flexibilität nur einen geringen Widerstand entgegen. Dies ermöglicht es dem Kolben, den an ihm anstehenden Fluiddruck effektiv in Vortriebsbewegung umzusetzen.

Wenn die Führung der Bewegung der von Kolbenstange und Kolben gebildeten Stelleinheit an der Kolbenstange erfolgt, so wirkt sich dies auf Grund des geringeren Umfangs der Kolbenstange vorteilhaft auf die Größe der in der Praxis unvermeidbaren Restreibung aus. Beispielsweise kann die Kolbenstange am Zylinder oder einem mit diesem verbundenen Teil geführt sein. Auch ein sich um die Rollmembran herum aufbauendes Druckgas-polster kann zur Führung der Stelleinheit beitragen.

Wie dies aus dem Stand der Technik an sich bekannt ist, kann auch die Zylinder-Kolben-Einheit der erfindungsgemäßen Abschlagvorrichtung pneumatisch betätigbar sein. Dabei kann von den beiden Arbeitsräumen, in die der Kolben den Innenraum des Zylinders unterteilt, zumindest der der Kolbenstange abgewandte Arbeitsraum mit Druckgas beschickbar sein.

Um das Abschlagmesser möglichst effektiv beschleunigen zu können, wird in Weiterbildung der Erfindung vorgeschlagen, dass die Stelleinheit in einer verkürzten Stellung der Zylinder-Kolben-Einheit verriegelt ist und dass der der Kolbenstange abgewandte Arbeitsraum unter einem vorbestimmten Gasdruck gehalten ist. Der das Abschlagmesser tragende Messerträger kann dabei an dem Stellelement angeordnet, beispielsweise an der Kolbenstange der Zylinder-Kolben-Einheit befestigt sein. Bei einem Gasdruck von etwa 5 bar lässt sich auf diese Weise bei 56 mm Hubweg eine Messergeschwindigkeit von etwa 15 m/s erreichen.

Wie dies ebenfalls an sich aus dem Stand der Technik bekannt ist, kann ein Puffer vorgesehen sein, der die Bewegung des Kolbens oder/und der Kolbenstange gegen Ende der Bewegung in die verlängerte Stellung der Zylinder-Kolben-Einheit dämpft. Dieser Puffer kann beispielsweise aus Polymerwerkstoff gefertigt sein.

In Weiterbildung der Erfindung wird vorgeschlagen, dass die Stell-vorrichtung eine Mehrzahl von über die Breite der Materialbahn verteilt angeordneten Zylinder-Kolben-Einheiten umfasst.

Um das Stellelement und die mit diesem verbundenen Teile zu Erzielung einer möglichst großen Beschleunigung massearm ausbilden zu können, wird ferner vorgeschlagen, dass der Kolben aus kohlefaserverstärktem Kunststoff gefertigt ist oder/und die Kolbenstange aus Aluminium gefertigt ist oder/und der Messerträger aus kohlefaserverstärktem Kunststoff gefertigt ist.

Die Erfindung wird im Folgenden an einem Ausführungsbeispiel an Hand der beigefügten Zeichnung näher erläutert werden. Es stellt dar:

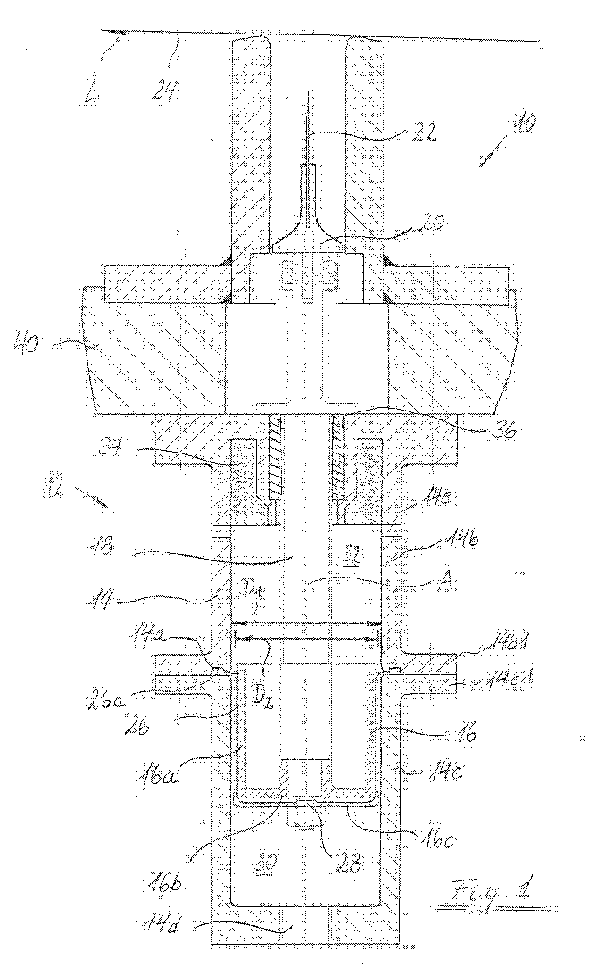

Fig. 1 eine schematische Schnittansicht einer erfindungs-gemäßen Abschlagvorrichtung.

Eine erfindungsgemäße Abschlagvorrichtung ist in Fig. 1 allgemein mit 10 bezeichnet. Sie umfasst eine Zylinder-Kolben-Einheit 12 mit einem Zylinder 14 und einem in dem Zylinder 14 in Richtung dessen Achse A hin- und herbewegbaren Kolben 16. Mit dem Kolben 16 ist eine Kolbenstange 18 verbunden, an der ein Messerträger 20 für ein Abschlagmesser 22 befestigt ist. Das Abschlagmesser 22 dient zum Durchtrennen einer sich in Lauf-richtung L bewegenden Materialbahn 24.

Der Kolben 16 ist in dem dargestellten Ausführungsbeispiel topfförmig ausgebildet, wobei die Außenumfangsfläche eines zylindrischen Schafts 16a dieser Topfform 16 als Anlage- und Lagestabilisierungsfläche für eine Rollmembran 26 dient. Die Rollmembran 26 ist mit dem Kolben 16 im Bereich des Topfbodens 16b verbunden. Und zwar ist sie im Bereich dieses Topfbodens 16b zwischen dem Topfboden 16b und einem Deckel 16c eingespannt. Eine Schraubbolzen-Mutter-Verbindung 28 dient zum einen zur Lagestabilisierung der Rollmembran 26 relativ zum Topfkolben 16, wozu der Schraubbolzen eine Durchbrechung der Rollmembran 26 durchsetzt, und zum anderen zur Befestigung des Deckels 16c am Topfboden 16b. Das obere freie Ende 26a der Rollmembran 26 ist wulstförmig verdickt und in einer Ringnut 14a des Zylinders 14 aufgenommen. Um die Ringwulst 26a in die Ringnut 14a einbringen zu können, ist der Zylinder 14 zweiteilig ausgebildet mit einem oberen Zylinderteil 14b und einem unteren Zylinderteil 14c. Die Ringnut 14a ist dabei in dem oberen Zylinderteil 14b ausgebildet. Über zwei Ringflansche 14b1 und 14c1 können die beiden Zylinderteile 14b, 14c miteinander beispielsweise durch Schraubverbindungen verbunden werden.

Erfindungsgemäß ist der Kolben 16 einschließlich des Deckels 16c mit Spiel in dem Zylinder 14 aufgenommen, d.h. der Außendurchmesser D1 des Kolbens 16 weist einen erheblich geringeren Wert auf als der Innendurchmesser D2 des Zylinders 14. Auf diese Weise kann sich der Kolben 16 in dem Zylinder 14 berührungsfrei und somit reibungsfrei bewegen. Die Rollmembran 26 unterteilt den Innenraum des Zylinders 14 in einen ersten Arbeitsraum 30 und einen zweiten Arbeitsraum 32. Dem ersten Arbeitsraum 30 wird über eine Bohrung 14d Druckgas zugeführt, welches den Kolben 16 in Richtung der Achse A in Fig. 1 nach oben zu treiben sucht. Die bei dieser Vortriebsbewegung aus dem zweiten Arbeitsraum 32 verdrängte Luft kann über Entlüftungsbohrungen 14e entweichen. Am Ende des Austriebswegs des Kolbens 16 ist im Zylinderteil 14b ein aus einem Polymerwerkstoff gefertigter Puffer 34 angeordnet, welcher die Austriebsbewegung des Kolbens 16 abbremst.

Die von Kolben 16 und Kolbenstange 18 gebildete Stelleinheit ist am oberen Ende des Zylinders 14 mittels eines Lagers 36 geführt. Des Weiteren trägt auch das an der Rollmembran 26 anstehende Druckgaspolster zur Führung der Stelleinheit bei.

Um das Abschlagmesser 22 mit hoher Geschwindigkeit in die Materialbahn 24 eingreifen zu lassen, ist der Kolben 16 mittels wenigstens eines Riegelelements, das an der Kolbenstange 18 oder dem Messerträger 20 angreifen kann, in der in Fig. 1 dargestellten zurückgezogenen Stellung verriegelt und der untere Arbeitsraum 30 ist mit einem unter Druck stehenden Gas, beispielsweise Luft, gefüllt. In diesem Zustand ist die Abschlagvorrichtung vorgespannt. Wird nun von einer nicht dargestellten Steuereinheit ein Abschlagbefehl an die Abschlagvorrichtung 10 erteilt, so wird die Verriegelung aufgehoben und das Abschlagmesser 22 schnellt unter dem Einfluss des in dem Arbeitsraum 30 herrschenden Gasdrucks in Richtung Materialbahn 24 vor. Der mit der Bewegung des Kolbens 16 nach oben einhergehende Druckabfall im Arbeitsraum 30 kann durch eine äußere (nicht dargestellte) Druckfluidquelle ausgeglichen werden.

Nachzutragen ist noch, dass eine Mehrzahl erfindungsgemäßer Abschlagvorrichtungen 10 über die Arbeitsbreite der Materialbahn 24 angeordnet sein und gemeinsam auf den Messerträger 20 und das Abschlagmessers 22 einwirken kann. All diese Abschlagvorrichtungen 10 können an einem gemeinsamen Träger 40 angeordnet sein.

### Bezugszeichenliste

- 10: Abschlagvorrichtung
- 12: Zylinder-Kolben-Einheit
- 14: Zylinder
- 14a: Ringnut
- 14b: oberes Zylinderteil
- 14c: unteres Zylinderteil
- 14b1: Ringflansch
- 14c1: Ringflansch
- 14d: Bohrung
- 14e: Entlüftungsbohrung
- 16: Kolben
- 16a: Schaft
- 16b: Topfboden
- 16c: Deckel
- 18: Kolbenstange
- 20: Messerträger
- 22: Abschlagmesser
- 24: Materialbahn
- 26: Rollmembran
- 26a: Ringwulst
- 28: Schraubenbolzen-Mutter-Verbindung
- 30: erster Arbeitsraum
- 32: zweiter Arbeitsraum
- 34: Puffer
- 36: Lager
- 40: Träger
- A: Achse
- L: Laufrichtung
- D1: Außendurchmesser
- D2: Innendurchmesser

## Patentansprüche

1. Abschlagvorrichtung (10) zum Durchtrennen einer laufenden Materialbahn (24), insbesondere aus Papier oder Karton, umfassend:
- einen Messerträger (20) mit Abschlagmesser (22), der der Materialbahn (24) benachbart und auf diese zu bewegbar ist, und
- eine Stellvorrichtung mit wenigstens einer Zylinder-Kolben-Einheit (12) zum Bewegen des Messerträgers (20),
wobei die Zylinder-Kolben-Einheit (12) einen Zylinder (14) umfasst, sowie einen in dem Zylinder (14) verlagerbar aufgenommenen Kolben (16), der den Innenraum (30/32) des Zylinders (14) in zwei Arbeitsräume (30, 32) unterteilt, mit einer Kolbenstange (18) verbunden ist und mit dieser die Stelleinheit (16/18) der Zylinder-Kolben-Einheit (12) bildet,
**dadurch gekennzeichnet, dass** der Kolben (16) in dem Innenraum (30/32) mit Spiel aufgenommen ist und dass eine Rollmembran (26) zum einen am Zylinder (14) und zum anderen am Kolben (16) befestigt ist und die beiden Arbeitsräume (30, 32) gegeneinander abdichtet.

2. Abschlagvorrichtung nach Anspruch 1,
**dadurch gekennzeichnet, dass** die Stelleinheit (16/18) im Bereich der Kolbenstange (18) geführt ist.

3. Abschlagvorrichtung nach Anspruch 2,
**dadurch gekennzeichnet, dass** die Kolbenstange (18) am Zylinder (14) oder einem mit diesem verbundenen Teil geführt ist.

4. Abschlagvorrichtung nach einem der vorhergehenden Ansprüche,
**dadurch gekennzeichnet, dass** die Zylinder-Kolben-Einheit (12) pneumatisch betätigbar ist.

5. Abschlagvorrichtung nach einem der vorhergehenden Ansprüche,
**dadurch gekennzeichnet, dass** die Stelleinheit (16/18) verriegelbar ist und dass der der Kolbenstange (18) abgewandte Arbeitsraum (30) unter einem vorbestimmten Fluiddruck gehalten ist.

6. Abschlagvorrichtung nach einem der vorhergehenden Ansprüche
**dadurch gekennzeichnet, dass** ein Puffer (34) vorgesehen ist, der die Bewegung des Kolbens (16) oder/und der Kolbenstange (18) gegen Ende in die verlängerte Stellung der Zylinder-Kolben-Einheit (12) dämpft.

7. Abschlagvorrichtung nach einem der vorhergehenden Ansprüche,
**dadurch gekennzeichnet, dass** der Messerträger (20) an der Kolbenstange (18) befestigt ist.

8. Abschlagvorrichtung nach einem der vorhergehenden Ansprüche,
**dadurch gekennzeichnet, dass** die Stellvorrichtung eine Mehrzahl von über die Breite der Materialbahn (24) verteilt angeordnete Zylinder-Kolben-Einheiten (12) umfasst.

9. Abschlagvorrichtung nach einem der vorhergehenden Ansprüche,
**dadurch gekennzeichnet, dass** der Kolben (16) aus kohlefaser-verstärktem Kunststoff gefertigt ist.

10. Abschlagvorrichtung nach einem der vorhergehenden Ansprüche,
**dadurch gekennzeichnet, dass** die Kolbenstange (18) aus Aluminium gefertigt ist.

11. Abschlagvorrichtung nach einem der vorhergehenden Ansprüche,
**dadurch gekennzeichnet, dass** der Messerträger (20) aus kohlefaserverstärktem Kunststoff gefertigt ist.
